# EUROPEAN PATENT APPLICATION

(11) **EP 4 475 088 A1**
(43) Date of publication of application: **11.12.2024**
(21) Application number: 23174326.1
(22) Date of filing: 19.05.2023
(51) Int. Cl.: G06V 10/774, G06V 20/10

(54) **GENERATING A DATASET FOR TRAINING AN ARTIFICIAL INTELLIGENCE MODEL**

(71) Applicant: Agrisynth Ltd., Fressingfield, Eye IP21 5SD (GB)
(72) Inventor: HERBERT, Colin, Fressingfield, Eye, IP21 5SD (GB); DEVINE, Thomas, Fressingfield, Eye, IP21 5SD (GB)
(74) Representative: ip21 Ltd

(57) **Abstract**

A system 100 is configured to generate S20 a dataset for the training of an artificial intelligence model and/or to train an artificial intelligence model using such a dataset. A configuration unit 21 is configured to define a configuration of the dataset. A component generator 23 is configured to generate objects corresponding to the defined configuration. A scene generator 24 is configured to generate a scene that includes the objects that have been generated. A dataset compiler 26 is configured to compile the dataset to include a number of images of the scene, together with annotation data associated with each image. The annotation data identifies the objects that are depicted by that image. A validation unit 40 is configured to validate an artificial intelligence model which has been trained using the dataset, to determine whether a performance measure of the artificial intelligence model satisfies a condition. A feedback unit 60 is configured to formulate a request for the dataset to include further images together with annotation data associated with each further image, if the performance measure does not satisfy the condition. The further images and their associated annotation are determined based on the performance measure.

## Description

### Technical Field

This disclosure relates to the generating of a dataset, and further relates to such a dataset being used to train an Artificial Intelligence (Al) model. This disclosure further relates to automated feedback from testing that AI model and to the generation of additional data for the dataset. Disclosure is provided of the automated feedback being used to form an automated loop for the generation of the additional data for the dataset.

### Background

Artificial Intelligence (Al) models (software) are trained using data that is processed by a computer algorithm, perhaps for the purpose of recognising objects depicted by images. The data may include examples of the kind that the AI model might be expected to recognise during use in the real world (the environment in which the AI model will be used).

For the AI model to interpret data, objects within the training data are annotated or labelled. We will use the term 'Annotation' rather than labelling, but in literature they are sometimes used interchangeably.

Supervised learning makes use of annotated examples, with the training allowing the AI model to associate the annotations with the examples that are recognised. Unsupervised learning makes use of examples with no annotation, with the training allowing the AI model to learn patterns between the different examples.

The collection of data together with the corresponding annotation data constitutes a 'dataset' which is used to train an AI model. Once the AI model has been trained, it is expected to be able to process unseen data during use. The accuracy of the AI model to process unseen data is dependent on the quality of the training, which is determined by the data that is available to the AI model. The accuracy of the AI model is enhanced by validating the AI model during the training phase, which means testing the AI model on unseen data, similar in scope and variance to the training data but unseen by the AI model. Typically a starting dataset is split into a training set (the greater part) and a validation set (the minor part). The results of this validation are interpreted by a user to determine any further training that is to be performed, and perhaps assess what additional data may enhance the performance of the AI model.

The AI model is programmed to detect patterns in the data, which can be used to make predictions about data that has not previously been encountered. The AI model is validated by evaluating whether it produces expected results when processing unseen annotated data (validation). Following validation, the AI model is typically tested using real world data (not annotated), to determine whether it provides an accurate output for situations that are to be encountered during use of the AI model.

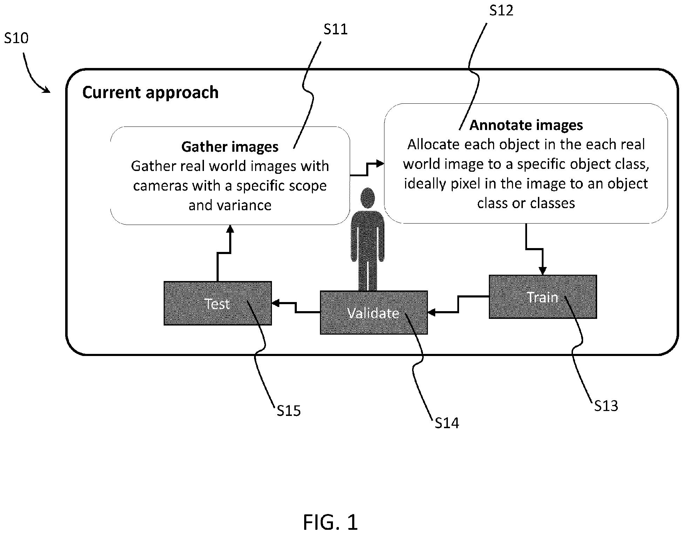

FIG. 1 illustrates a current approach S10 for gathering real world data and training an AI model. In step S11, real world images are gathered using cameras, attempting to control the scope and variance of those images. This means including representative images that may be found in the real world, for example a range of lighting conditions and shadows. In step S12, each object in every real world image is allocated to a specific object class. Typically 'bounding boxes' (boxes drawn on an image) are used to define an object but for optimum accuracy, ideally each pixel in the image is allocated to an object class or classes. In step S13, the real world images together with their annotation data are used to train an AI model. In S14, the AI model is validated using unseen data, wherein the validation dataset includes images, together with their annotation data which were gathered during step S11 and annotated in step S12, although this validation data was not used to train the AI model in step S13. In S15, the AI model is tested using real world images, which may or may not have been captured in step S11 but are not annotated.

The training of AI models using existing methodologies is often limited by the available training data. Typically, a large amount of data is used to train the AI model. However, if training data is complex to capture and difficult to annotate, this limits the amount of training data that is available to the AI model. Furthermore, any biases in the training data will result in biases in the trained AI model. Thus, if only a limited numberof examples are available, this can restrict the extent of training (e.g., machine learning or deep learning) that is available to the AI model. Inconsistent results are obtained even when extensive data is used to train the AI models.

There is a demand for an AI software solution that supports the analysis and interpretation of complex agricultural environments, represented by scene images. A scene is a collection of crops, weeds, pests, diseases and other objects on plants and soil either in the real world or imagined in a synthetic or virtual world. A scene image is a representation of that scene from a specific viewpoint. A single scene can spawn multiple images ranging from above the crop to vertically beneath the crop with various camera settings such as exposure, resolution and light spectrum.

However, it has been found that the capturing and annotating real world images of agricultural environments, especially complex crop scenes, is very problematic. As a consequence, there is a demand for high quality training data that can be used in a scalable manner for the purpose of training AI models, so that the AI models can accurately interpret complex scenes from the real world environment.

### Summary

Aspects of the present invention are set out by the claims. Further aspects are also described.

A number of challenges are encountered when manually capturing images (with a camera) and annotating those images:
- A real world agricultural environment is likely to contain a large variety of objects including many, diverse plant species, pests and diseases, together with physical objects such as stones, debris from previous crops and water droplets and first on plant leaves.
- The manual capturing of images with a camera is time consuming.
- Controlling the scope of image datasets is problematic, e.g., ensuring that all growth stages of a specific weed species are captured.
- Controlling the variance of the image dataset means that for all objects within scope we need representative images of the real world use case such as different lighting conditions, different growth stages, different crop varieties.
- Time is wasted managing the image dataset, ensuring that images are in scope, within the planned variance and are otherwise appropriate, with the dataset having to be inspected and some images being discarded if they are found to be unsuitable, e.g., outlying variance such as very low illumination.
- Images are not usable if they are blurred, and it's typically difficult for all objects of interest to be in focus within images that are captured by a camera, especially motion blur when taken by a human in poor lighting conditions.
- It's not possible to obtain an appropriate homogeneous dataset from a real agricultural environment, and so as a work around, techniques are developed to compensate for inevitable inhomogeneities, including image augmentation where certain images are rotated or skewed to increase the variance of the dataset but in a very clumsy manner.
- Capturing a controlled and appropriate dataset that is representative of the real world can take months or years.
- A simple technique for annotating an object in an image involves drawing a 'bounding box' around an object, although this does not have the precision of allocating each pixel to the object that is shown in the image.
- Applying bounding boxes to objects in a complex agricultural scene image that has lots of overlapping leaves of grasses and other plants causing extensive occlusion of objects, is meaningless as all of the bounding boxes have significant overlap reducing the ability of the AI model to learn about the features of specific objects and so reducing the quality of training.
- Annotating objects is not possible by humans to a high level of granularity, which inhibits the annotating of images at a pixel level.
- Annotating images at a pixel level takes human appropriate software, human precision and an inordinate amount of time and patience making it almost impossible for humans to do at scale with an acceptable level of accuracy.
- Annotating an image at pixel level by humans involves time taken to zoom in and zoom out of the image to view the detail of pixels.
- Humans can't easily judge edge effects of objects within an image and often allocate such pixels to the wrong object class of classes.
- Minute detail in some images of some plants only having parts of their leaves visible through the leaves of other plants makes it almost impossible for a human to annotate such images at a pixel level with any accuracy.
- If more than a single object class is to be annotated (typically there are multiple object classes in most images), then this adds to the complexity of annotating what is shown by each pixel of the image
- A human can only allocate a single pixel to a single object class as they can only see the 2 dimensional image
- As a result of the complexity, datasets of images together with their annotation data at pixel level from complex real world environments tend to be small, e.g. a few hundred images at best
- Training AI models on small datasets will result in a poorly performing AI model in the real world
- There is a demand for very large datasets, e.g. several hundred thousand images, to be used to train AI models, which is not practical to obtain for a complex environment such as can be found in the technical field of agriculture

In a first aspect, there is provided a method (S20) for generating a dataset. The method (S20) comprises: defining (S21) a configuration of the dataset; generating (S23) objects corresponding to the defined configuration; generating (S24) a scene that includes the objects that have been generated; compiling (S26) the dataset to include a number of images of the scene, together with annotation data associated with each image, wherein the annotation data identifies the objects that are depicted by that image; validating (S40) an artificial intelligence model which has been trained (S30) using the dataset, to determine whether a performance measure of the artificial intelligence model satisfies a condition; and formulating (S60) a request for the dataset to include further images, together with annotation data associated with each further image, if the performance measure does not satisfy the condition, wherein the further images are determined based on the performance measure. A technical effect of requesting additional data is to ensure that the training data can serve to train the AI model such that the performance measure satisfies the condition. Generating the data that forms the dataset is more efficient than collecting data from a real world environment, saving time while lowering the burden of compiling the dataset. Thus, the compiling of images that include objects that have been generated, together with the requesting of further images that are to be included in the dataset, confers a synergistic effect of providing an efficient way of enhancing the quality of the training data, so that AI models can accurately interpret complex scenes in real world environments.

Optionally, the method further comprises: defining (S21) a further configuration of the dataset based on the request for the dataset to include the further images together with annotation data associated with each further image; generating (S23) further objects corresponding to the defined further configuration; generating (S24) a further scene that includes the further objects that have been generated; compiling (S26) the dataset to include a further number of images of the further scene, together with annotation data associated with each image, wherein the annotation data identifies the further objects that are depicted by that image; validating (S40) an artificial intelligence model which has been further trained (S30) using the dataset, to determine whether the performance measure of the artificial intelligence model satisfies a condition; and formulating (S60) a further request for the dataset to include even further images, together with annotation data associated with each even further image, if the performance measure does not satisfy the condition, wherein the even further images and annotation data are determined based on the performance measure.

Advantageously, the dataset is compiled to include the further images, with the effect that the performance measure is expected to improve. This makes it more likely that the condition is more likely to be satisfied, with the validation progressing towards approving the training of the AI model.

Optionally, the dataset continues to be compiled until the performance measure satisfies the condition. A technical effect of this is to provide a controlled loop approach, to optimise AI model performance based on automated feedback to dataset generation. Advantageously, the AI model will be output when the condition is satisfied, such as the performance measure exceeding a threshold value.

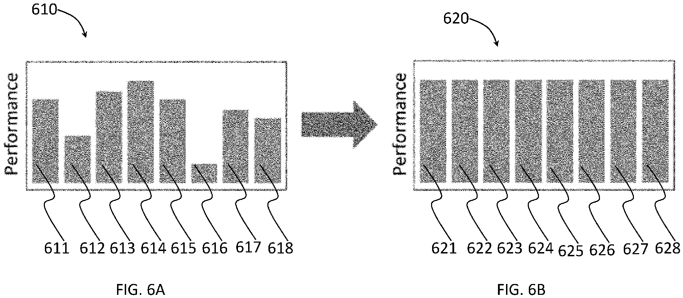

Optionally, validating (S40) the artificial intelligence model comprises determining, for a specific type of image, whether the performance measure does not satisfy the condition; and formulating (S60) the request corresponds to identifying that the further images are to correspond to the specific type of image, if the performance measure determined for the specific type of image does not satisfy the condition. As a result of requesting a specific type of image, a request is formulated for a set of images that would bolster a specific bar on the bar chart in FIG. 6A. For example, one of the bars may represent thin leaves and the AI model is performing poorly where there are thin leaves. The request would then be for more images to be added to the dataset that have thin leaves. The example of 'Thin leaves' could instead be any characteristic of the dataset, such as poor light, bright light, presence of crop debris, slugs being present, leaning plants, etc. Thus, the determining of a type of image that does not satisfy the condition confers the ability to ask for specific images showing specific content. Accordingly, a technical effect of the validation determining whether the condition is satisfied, is that it can be identified whether the generation of a specific type of image would help to improve the performance measure. An advantage of requesting further images that correspond to the specific type of image is that the AI model can be trained using these further images, thus making it more likely during validation that the performance measure will satisfy the condition. Optionally, validating (S40) the artificial intelligence model comprises determining whether the performance measure exceeds a threshold value. A technical effect of determining that the performance measure exceeds a threshold value is that a qualitative assessment can be made of the performance of the AI model. In practice, several performance measures are selected, with the dataset being generated so that each of these performance measures are satisfied. Advantageously, an AI model will be output that has been trained to a acceptable standard. The choice of performance measures, together with the threshold values, may be selected by the user, allowing the training of the AI model to be customised in advance of the dataset being generated.

Optionally, validating (S40) the artificial intelligence model comprises using the artificial intelligence model to obtain interpreted data by interpreting a test image, and assessing whether the interpreted data matches annotation data which describes what is depicted by the test image. Validation is performed using a test image where we have annotation available, and so can see what the result of the AI model should be. Testing against real world images is where we don't have any annotation available for the image, and so can only judge what the result should be by other means, normally human/visual. Accordingly, a technical effect of using the AI model to interpret the test image is that the interpreted data can be compared to the annotation data, to determine whether the image has been accurately interpreted by the AI model. Advantageously, validation of the AI model can be performed using test data that has been generated in the same way as the training data, allowing an assessment to be performed of whether the training of the AI model has been successful.

Optionally, the method further comprises retrieving (S22) resources that are to be used to generate the objects, the scene, or a starting dataset. Such resources may be provided by a library unit (22). Such a library unit (22) may be part of the system (100) that is used to generate the dataset, or alternatively may be hosted by a different party. Advantageously, the library may store resources that can be efficiently retrieved to enhance the generation of the dataset. The resources may be used to generate the objects, for example, by providing specifications of the objects that are to be included in the image. The resources may be used to generate the scene, for example, by determining how the objects in the scene would be expected to interact with one another. The resources may be used to generate a starting dataset, for example, by assisting with the definition (S21) of the configuration of the dataset.

Optionally, each pixel of each image of the dataset is associated with annotation data which describes what object is depicted by that pixel. The annotation data may be generated by an annotation generator (25). Such an annotation generator (25) may be part of the system (100) that is used to generate the dataset, or alternatively may be hosted by a different party. A technical effect of the annotation data describing what object is depicted by the individual pixels is to provide a record of where each object is located in each image. The fact that the scene is generated means that it can be accurately determined what is depicted by each image. An advantage of generating the annotation data is to achieve a level of precision that is significantly higher than could be achieved in practice by humans annotating images.

Optionally, the scene corresponds to an agricultural environment. Agricultural environments serve as examples of a complex environment. It is typically found that datasets for complex environments are difficult to generate. A technical effect is to provide an efficient way of generating datasets for complex environments, which ensures that a significant quantity of data can be generated that is suitable for training an AI model. Advantageously, AI models can be trained that can interpret real world images using datasets that have been generated for complex environments.

In a second aspect, there is provided a method (S100) for training an artificial intelligence model. The method (S100) comprises: obtaining (S20) a dataset that has been generated by performing a method (S20) according to the first aspect; performing (S30) training of the artificial intelligence model using the dataset; and outputting (S70) the trained artificial intelligence model if the performance measure satisfies the condition. The training of the AI model may be performed as part of the method (S20) for generating the dataset, or alternatively, may be performed separately by a different party. Advantageously, an AI model can be trained using a dataset that has been efficiently generated.

In a third aspect, there is provided a program which, when executed by a computer, causes the computer to perform a method according to the first aspect or the second aspect. Advantageously, the method of generating the dataset and the method of training the AI model may be realised by software that is executed by a processor, or may be realised by dedicated hardware that is capable of carrying out all or a portion of the functionality.

In a fourth aspect, there is provided a computer-readable storage medium storing a program according to the third aspect. Advantageously, the method of generating the dataset and the method of training the AI model may be stored by a memory device, so that it can be implemented by a user when the program is executed.

In a fifth aspect, there is provided a system (100) for generating (S20) a dataset. The system (100) comprises: a configuration unit (21) configured to define (S21) a configuration of the dataset; a component generator (23) configured to generate (S23) objects corresponding to the defined configuration; a scene generator (24) configured to generate (S24) a scene that includes the objects that have been generated; a dataset compiler (26) configured to compile (S26) the dataset to include a number of images of the scene, together with annotation data associated with each image, wherein the annotation data identifies the objects that are depicted by that image; a validation unit (40) configured to validate (S40) an artificial intelligence model which has been trained (S30) using the dataset, to determine whether a performance measure of the artificial intelligence model satisfies a condition; and a feedback unit (60) configured to formulate (S60) a request for the dataset to include further images together with annotation data associated with each further image, if the performance measure does not satisfy the condition, wherein the further images are determined based on the performance measure. The fifth aspect specifies hardware that may be used to implement the method specified by the first aspect, including any of the optional features of the first aspect. Accordingly, the system (100) is configured to perform a method (S20) for generating a dataset.

Optionally, the system further comprises a human interface unit (10) configured to communicate between the system (100) and a user interface operated by a user. A technical effect of the human interface unit (10) is to provide a dynamic interface that can be operated by a user. The human interface unit (10) may facilitate initial settings, triggering actions, storing data, monitoring progress of the loop and replaying process success in a visual manner. Advantageously, the human interface (10) facilitates communication with all other parts of the system (100).

In a sixth aspect, there is provided a system (100) configured to train an artificial intelligence model. The system (100) comprises an obtaining unit (26) configured to obtain (S20) a dataset that has been generated by a method (S20) according to the first aspect (for example by using a system according to the fifth aspect); a training unit (30) configured to perform training of the artificial intelligence model using the dataset; and an output unit (50) configured to output the trained artificial intelligence model if the performance measure satisfies the condition. The sixth aspect specifies hardware that may be used to implement the method specified by the second aspect, including any of the optional features of the second aspect. Accordingly, the system (100) is configured to perform a method (S100) for training an AI model.

### Brief Description of the Drawings

Embodiments will now be described, by way of example only, with reference to the accompanying drawings, in which:
- FIG. 1 is a flow chart which illustrates the current approach to gathering images and training an AI model;
- FIG. 2 illustrates details of a dataset that may be generated;
- FIG. 3 is a schematic illustrating a system configured to generate a dataset and train an AI model in a closed loop with no ongoing human intervention other than setting the performance criteria for an AI model at the start;
- FIG. 4 is a flowchart that identifies a way of performing supervised training of an AI model;

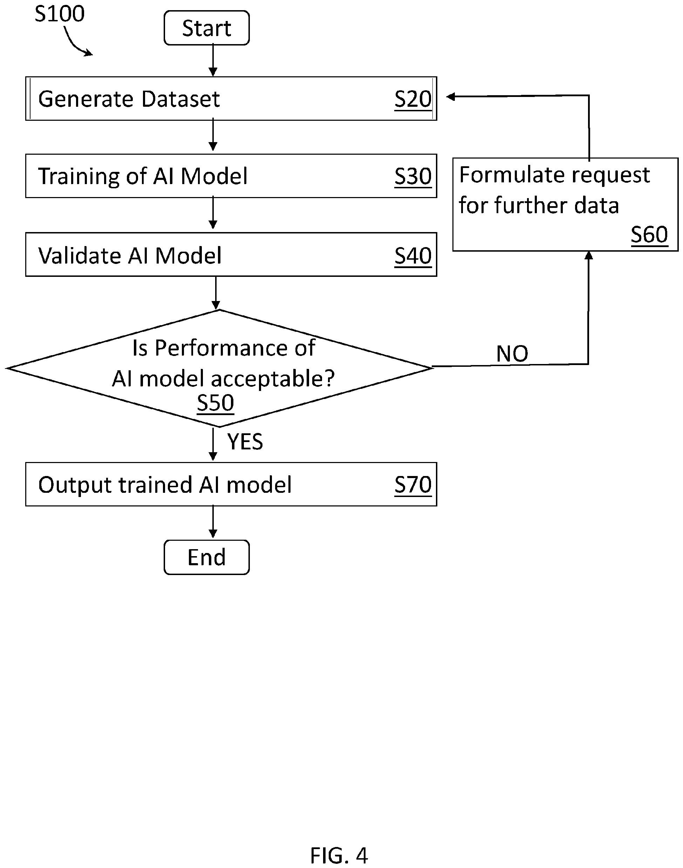

- FIG. 4 is a flowchart that identifies a way of generating synthetic images for a synthetic dataset, with the synthetic images being generated in innovative software and not being captured from the real world with a camera by humans or other means;
- FIGs. 6A-6B provide bar charts illustrating how performance can be measured and improved, wherein:
   ∘ FIG. 6A illustrates the performance measures for the initially trained AI model with each bar representing a specific characteristic (e.g., high illumination, low frequency of a specific plant species); and
   ∘ FIG. 6B illustrates the performance measures for a final dataset, the closed loop having made several requests for additional synthetic imagery of specific scope and variance to be added to the initial synthetic dataset;

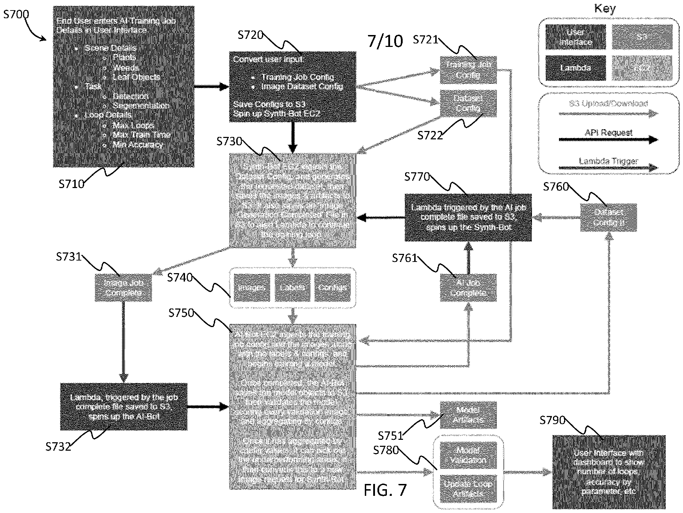

- FIG. 7 is a flow chart illustrating how a dataset of synthetic images can be generated in software, trained, validated, tested and the training dataset improved in scope and variance in order to achieve an optimised performance measure;

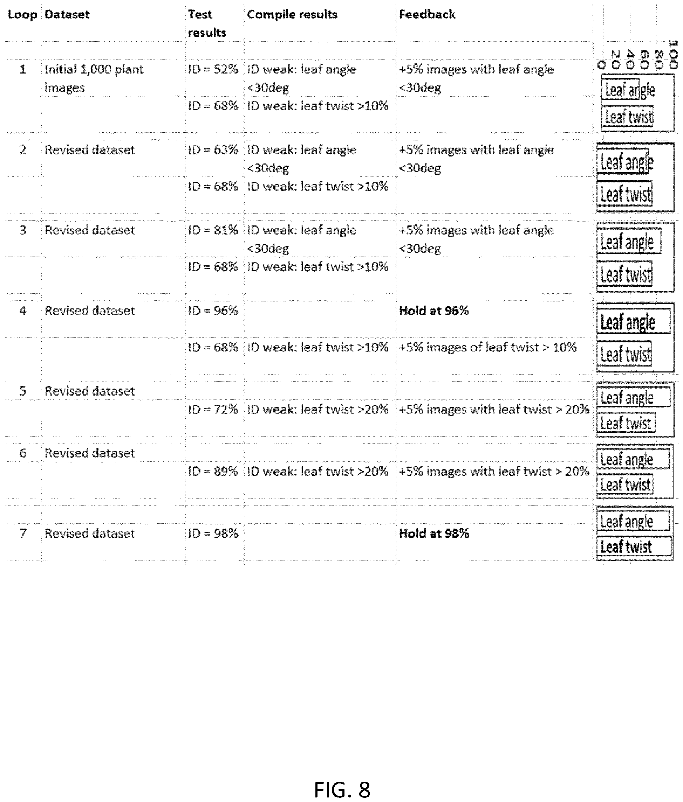

- FIG. 8 is a table showing how test results are improved as a dataset of synthetic images is improved in a step wise fashion as the validation results are used to construct requests for more images to be added to the synthetic dataset to improve its scope and variance for specific characteristics where the performance of the AI model is weakest; and

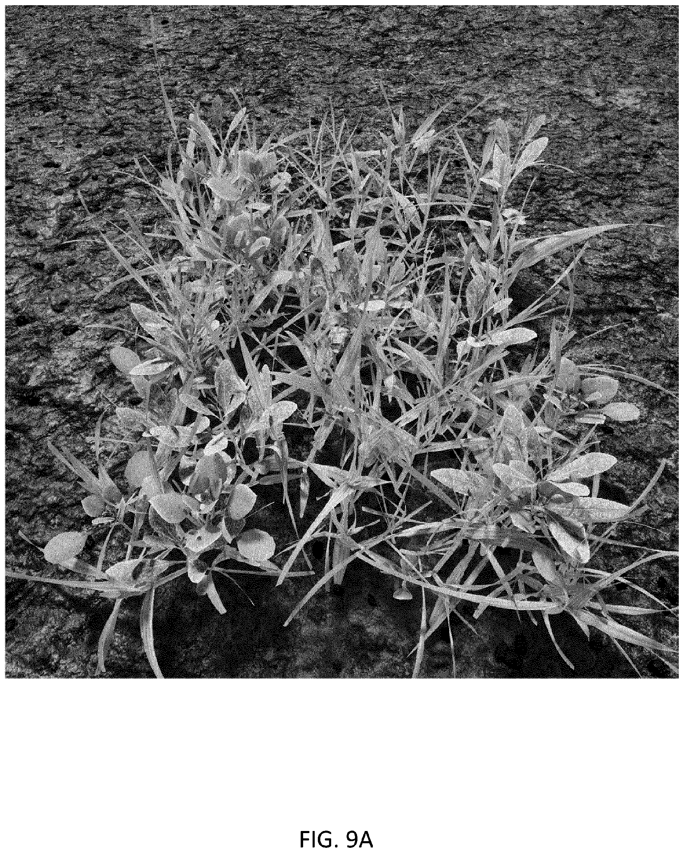

- FIGs. 9A-9B illustrate annotation of a synthetic image of an agricultural scene, with FIG. 8A showing a synthetic image that includes multiple species, FIG. 8B showing 100% pixel-perfect annotation of each species with different grey shading used to distinguish these species.

### Detailed Description

Various exemplary embodiments, features, and aspects are described in detail below with reference to the drawings.

Disclosure is provided of possible techniques for using annotated images of a synthetic environment, which provides insight into how a real-world image should be annotated. Thus, a technical effect of training an artificial intelligence (Al) model using annotated synthetic images, is that the AI model can subsequently be used to annotate images of real-world complex environments efficiently and precisely.

Use cases for agricultural AI solutions include the use of robots to monitor a real-world agricultural environment and to apply guided treatments in some cases. This enhances the efficiency of growing crops, particularly where crop plants are difficult to distinguish from weeds, e.g., wheat and grass weeds.

Robots are currently being adopted to control weeds, for example using lasers. Robots tend to be specialised to specific use cases, e.g., weed control in wide row crops where the crop scenes are relatively simplistic and not that complex, such as training a robot to distinguish between wheat and grass weeds where the leaves are overlapping and occluding each other. The innovation disclosed facilitates the development of higher performing and more robust AI models suitable not only for simple environments but for more complex environments to be analysed. An example might be where the number and position of different plant species being present in the same image, needs to be specified accurately for treatments to be applied to one species and not another. A solution for training AI models for such robots is using synthetic images, rather than using real world images and to optimise the performance of such models. The utility of the AI models is enhanced by establishing target datasets that are developed by working back from use cases that are of interest in the real world.

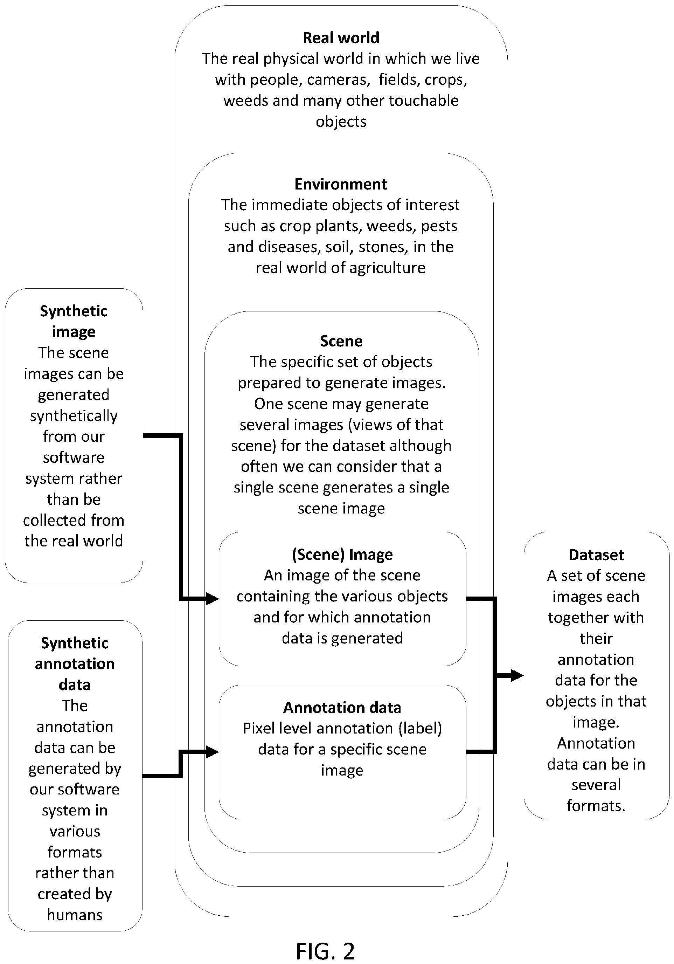

FIG. 2 illustrates details of a dataset that may be generated. The dataset is to provide insight into the real world in which we live, with people, cameras, fields, crops, weeds and many other touchable objects. The dataset Is to be used to train an AI model to interpret an environment of the real world, with the environment including the immediate objects of interest, such as crop plants, weeds, pests and diseases, soil, stones, for this example directed to the real world of agriculture. The dataset is to include information about a scene, which includes a specific set of objects prepared to generate images. One scene may generate several images (views of that scene) for the dataset, although often we can consider that a single scene generates a single scene image. The dataset is to be made up of scene images together with their annotation data for the objects in that image. Annotation data can be in several formats.

A scene image provides an image of the scene containing the various objects and for which annotation data is generated. In this example, the scene image is a synthetic image, for which the scene images can be generated synthetically from the disclosed software system rather than be collected from the real world.

Annotation is the process where every pixel in an image is allocated to an object class or classes. Thus, the annotation data provides pixel level annotation (label) data for a specific scene image. In this example, the annotation data is synthetic annotation data, for which the annotation data can be generated by the disclosed software system in various formats rather than created by humans.

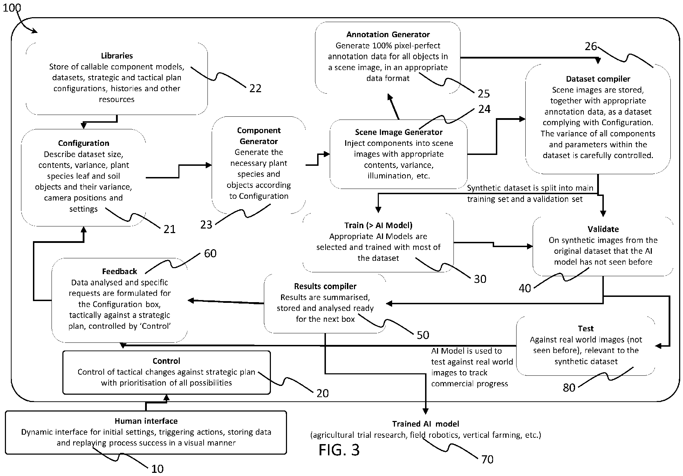

FIG. 3 illustrates a system 100 configured to generate synthetic images of plant species and other objects, inject them into scene images, train an AI model, validated and test that AI model and then feedback requests for additional synthetic images to be automatically generated and added to the previous dataset to complete a closed, automated loop free of human intervention other than the initial performance requirements, a starting dataset configuration and monitoring the loop process. FIG. 3 shows a human interface 10, a control unit 20, a configuration unit 21, a library unit 22, a component generator unit 23, a scene image generator unit 24, an annotation generator unit 25, a dataset compiler 26, a training unit 30, a validation unit 40, a results compiler 50, a feedback unit 60, a trained AI model 70, and a test unit 80.
- All of the parts of the system 100 are formed into a controlled loop and all imagery generated is synthetic (artificial) having been generated in software and not captured from the real world.
- The human interface 10 is configured to communicate between the closed loop system 100 and a user interface operated by a user. The human interface 10 provides a dynamic interface for initial settings, triggering actions, storing data, monitoring progress of the loop and replaying process success in a visual manner. The human interface 10 communicates with all other parts of the system 100, typically via the control unit 20.
- The control unit 20 is configured to control all of the components of the system 100. The control unit 20 can perform control of tactical changes against a strategic plan for generating data and training the AI model, and is a layer between the human interface 10 and the processes within the loop system 100.
- The configuration unit 21 is configured to define a configuration of the dataset. The configuration unit 21 can describe the target dataset size, contents, scope (object types, e.g., plant species), variance, other leaf and soil objects and their variance, camera positioning and settings.
- The library 22 is configured to provide resources that are to be used to generate the scene image. The library 22 may store callable component plant image models, part trained AI models, starting datasets, strategic and tactical plan configurations, histories and other resources. The library 22 is not essential, as these resources may be received from an external library of resources. For example, the resources to be used to set the configuration may be received from the human interface 10.
- The component generator 23 is configured to generate image components of the scene image corresponding to the defined configuration. During use, the component generator 23 generates individual plant species and other objects according to the configuration unit 21.
- The scene image generator 24 is configured to generate a scene image of multiple plants species and other objects and so includes the components that have been generated by the component generator 23. During use, the scene generator 24 injects components into the scene images with appropriate contents, variance, illumination, etc. From a single scene, multiple scene images can be generated by the scene image generator 24, before another scene is created.
- The annotation generator 25, is configured to generate annotation data associated with each pixel of each scene image generated for the dataset. The annotation data describes what object is depicted by that pixel. The format of the annotation generator 25 can be configured at the human interface 10 with output formats such as segmented image masks or text data. The annotation generator 25 is not essential, because its functionality may be performed by another party, or may be performed by the scene generator, or the compiler 26. The synthetic images in the dataset include scene images taken of a scene. If it is annotated (using colour or shade) the image becomes an 'annotated image'. An AI model can be trained using both the synthetic scene image and the annotation data. The annotation data can be an annotated image or a text file with pixel coordinates or a whole range of other file formats.
- The dataset compiler 26 is configured to compile the dataset to include a number of scene images. Each scene image has annotation data associated with it which identifies the objects that are depicted by that image. Scene images are stored, together with the appropriate annotation data, as a dataset complying with the configuration provided by the configuration unit 21 and initially input by the human interface 10 and then modified either by the human interface 10 or by the feedback unit 60 as the loop is running. The variance of all objects and the characteristics of each object within the dataset are carefully controlled by the configuration unit 21. During use, the compiler 26 may split the dataset into a main training set and a validation set. The training set is sent to the train unit 30, and the validation set is sent to the validation unit 40.
- The training unit 30, is configured to perform training of the AI model using the scene images and the annotation data from the dataset. FIG. 3 shows an example for which the training unit 30 is part of the system 100. In this case, the dataset is provided to the training unit 30 by the dataset compiler 26. However, in principle, the training unit 30 does not have to be a part of the system 100, and may instead by controlled by a separate entity. In general terms, the training unit 30 is trained using a dataset that is received from any obtaining unit 26 that is configured to obtain the annotated images.
- The validation unit 40 is configured to validate the AI model which has been trained using the scene images and annotation data from the dataset. The validation unit 40 is configured to determine whether the performance of a specific characteristic of the AI model satisfies a condition. As an example, the condition that is assessed by the validation unit 40 could be a performance criteria that has been input through the human interface 10. The condition may correspond to the assessment that the performance measure exceeds a threshold value. The AI model is validated by using the AI model to obtain interpreted data from one of the validation images and assessing whether the interpreted data matches the annotation data which describes exactly what is depicted in that validation image. During use, synthetic images from the original dataset are used by the validation unit 40 to validate the AI model. The validation is performed using images that have not been seen by the AI model before during training by the training unit 30. Once validation has been performed, the validate unit 40 sends validation results to the results compiler 50.
- The results compiler 50 is configured to receive validation results from the validation unit 40. The results are summarised, sorted, analysed and stored. The results compiler 50 compares the performance of the AI model to the pre-configured performance acceptance thresholds for each object. The performance is assessed on every object to see where the performance is acceptable having reached a threshold set in the configuration unit via the human interface 10, or where it is not acceptable having not reach a configured threshold. If the performance of the AI model in whole or in part, is not acceptable, then the compiled results are provided to the feedback unit 60. If the performance of the AI model is acceptable, then the trained AI model is output 70 and the loop stops running. Thus, the results compiler 50 serves as an output unit configured to output the trained AI model 70 if the performance measure satisfies the condition (e.g., the condition may be an assessment, for the AI model as a whole, that the performance measure meets the configured acceptance criteria).
- The feedback unit 60 is configured to analyse the results from the results compiler 50 and to formulate a request for the dataset to include further scene images together with the appropriate annotation data if the performance measure does not satisfy the performance criteria threshold. The further scene images and annotation data are determined based on the performance measure. Data is analysed and specific requests are formulated, with these requests being sent to the configuration unit 21. Upon receipt of the requests, the configuration unit 21 updates the configuration of the dataset, so that further images can be generated. The requests may be formulated tactically against the strategic plan and will be controlled by the control unit 20 so that the scope and variance of all objects within the dataset is controlled.
- The test unit 80 may be used to test the AI model using real world images, captured by a camera, that haven't been seen before by the AI model. This is the final and ultimate test of the AI model if such real world images are available. The real-world images used to test the AI model will be representative of the final use case for the AI model. In some cases, the AI model will be being trained for a use case where no real world images have yet been captured and so the use of the test unit 80 is optional. In cases where real world images have been captured and are available for test of the AI model, testing by the test unit 80 will be intermittent, with the validate unit 40 providing the majority of the results for the feedback unit 60.

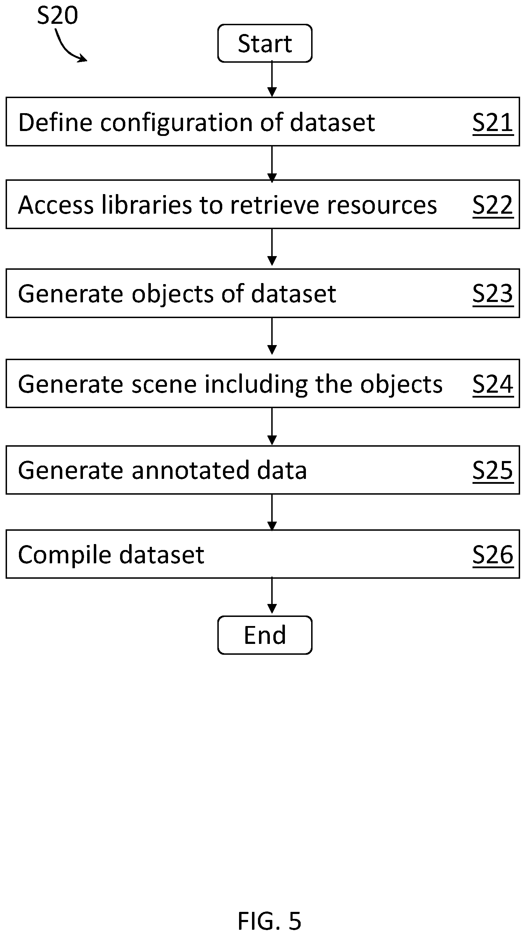

FIG. 4 identifies a method S100 of generating a synthetic dataset to train an AI model of which performance can be validated (and) tested with feedback to facilitate generation of additional image data. The system 100 of FIG. 3 is configured to implement the method S100 shown by FIG. 4.
- In step S20, the synthetic dataset is generated. Further detail is provided by FIG. 5.
- In step S30, the train unit 30 performs training of the AI model. The generation of the dataset and the training will be performed by the same system 100.
- In step S40, the validate unit 40 validates the AI model. The validate unit 40 validates the AI model using unseen data that has been generated according to step S20. However, The training may be performed by another party, with the training unit 30 receiving the dataset generated in step S20, and subsequently sending the trained AI model to the valuation unit 40.
- In step S50, the results compiler 50 assesses whether the performance of the AI model is acceptable. If the performance of the AI model is not acceptable, then the process progresses to step S60. If the performance of the AI model is acceptable, then the process progresses to step S70. The results compiler 50 determines whether the performance measure satisfies a condition, such as whether a performance value exceeds a threshold.
- In step S60, the feedback unit 60 formulates a request for further annotated data. The method returns to step S20, with further data of the dataset being generated. This loop continues until the performance measures of the AI model are all assessed as being at an acceptable level.
- In step S70, the trained AI model is output. The trained AI model may be further tested using real-world data, which can be used to track commercial progress of the AI model. Applications of AI models include agricultural trial research, field robotics, vertical farming, grain quality assessments, etc.

FIG. 5 provides more detail of the method S20 of generating image annotation data for the images in the dataset. The system 100 of FIG. 3 is configured to implement the method S20 shown by FIG. 5.
- In step S21, a configuration of the dataset is defined.
- In step S22, libraries are accessed to retrieve resources to be used to generate the dataset. This step is not essential, because alternatively, the resources may be received from an external source or may not exist.
- In step S23, the various components of scene images are generated corresponding to the defined configuration.
- In step S24, a scene is generated that includes the components that have been generated.
- In step S25, annotated data is generated. The annotation data is associated with each pixel of each image of the dataset. The annotation data describes what object is depicted by that pixel. The performing of step S25 is not essential, because its functionality may instead be performed as part of generating the scene in step S24 or as part of compiling the dataset in step S26.
- In step S26, the dataset is compiled to include a number of scene images. Each scene image has annotation data associated with it which identifies the components that are depicted by that image.

Generating annotation data S20 has a much lower burden than capturing and annotating real-world images, being generated by the system 100 in seconds rather than months by humans. Innovation is found in the way in which the annotated data is generated 25 and the data is collated by the dataset compiler 26. This innovation has contributed to further innovation of the training and validation of AI models, as well as the targeting of data that is to be collated. Thus, the generation of annotated data provides opportunities for innovation of the training unit 30, the validation unit 40, the results compiler unit 50, and the feedback unit 60.

FIGs. 6A-6B are bar charts which illustrate how a performance measure can be improved. FIG. 6A illustrates the performance measures 610 for an initial dataset of synthetic images. FIG. 6B illustrates the performance measures 620 for an improved dataset. The performance measure analysis helps to establish reasons why the training of the AI model was unsuccessful, so that the training can be improved.
- The y-axis of the bar charts in FIGs. 6A-6B illustrates a performance measure that has been calculated to assess the performance of the AI model. The validation S40 by the validation unit 40 involves a determination of whether the annotations predicted by the AI model match the annotations that are included in the validation data. An example of a performance measure is the percentage of pixels of a test image for which the predicted annotations correctly match the actual annotations that are associated with the image. Thus, an assessment is made of whether each pixel has been allocated to the correct object that is shown in the image. If the performance measure is low, this indicates that further training data should be obtained. This allows the generation of training data to be targeted. The use of simulations to collect the data means that the generation of training data can easily be targeted.
- The x-axis of these bar charts in FIGs. 6A-6B provides a number of bars, with each bar representing a different condition of the environment for which the AI model is expected to be able to perform recognition above a threshold of the performance measure. Ideally, a 100% robust image recognition would be desired, although in practice, a threshold of 95% may be an acceptable performance measure depending on the use case. To raise the performance measure as high as possible, the feedback unit 60 will focus on conditions for which the performance measure is lowest, with target datasets being identified which are designed to raise the performance measure for these conditions.
- FIG. 6A shows bars 611-618 of the performance measures 610 that have been determined for the initial dataset of synthetic images. FIG. 6B shows the bars 621-628 of the performance measures 620 for the improved dataset. In FIG. 6A, the lowest bar 616 has a performance measure that is below a threshold value that has been specified as being considered acceptable. As a result, a dataset is generated that includes further images of a type determined as being useful for training the AI model. As a consequence, the performance measure for the bar 626 is raised above the threshold. For each of the bars 611-618 in FIG. 6A, an assessment is made of the types of images that will be valuable for raising the performance measures. As a consequence, each of the bars 621-628 show a performance measure that is above the threshold value.

There is a demand to ensure that the synthetic scene images are relevant to the real world and representative of it. As a result, it is possible to monitor various parameters that are of interest. This is illustrated by providing bar charts of the type shown in FIGs. 6A-6B for each of these parameters. Examples of parameters that are of interest include:
- Time of day: Each bar in the bar chart may represent a particular time of day, with the performance measure being calculated for each time that is of interest.
- Number of plants in scene.
- Age of the plants.
- Angle of leaves.
- Angle of emergence of a leaf from the stem.
- Size of leaves.
- Curvature of leaves.
- Predation (e.g., a rabbit eating a leaf).
- Soil type.
- Geographic location with slant angles.
- Moisture of soil.
- Stones.
- Clodding of soil.
- Objects on soil.
- Crop debris, which is left over from the previous crop.
- Objects on plants.
- Water droplets on leaves.
- Soil stains on leaves.
- Spots on leaves.
- Different colours of leaves.
- Weeds.
- Broad leaf weeds.
- Camera specifications.
- Lighting conditions.

All of the above factors taken together in synergy results in a very complex environment. It is difficult to train an AI model to distinguish between each of these parameters to an acceptable level of accuracy. If synthetic images are to be used, there is a demand for these images to include an appropriate range of these objects. An assessment is to be made of what images should be produced to top up the dataset. Computer resources are often limited, and so there is a demand to be selective of the processing that is to be performed for analysing a high dimensional space, for a situation in which there is a large number of parameters. The datasets cannot provide every possible example that might be encountered by the AI model once it has been trained, and so there is a demand to identify ways in which missing data can be bolstered.

FIG. 7 is a flow chart illustrating how a dataset of synthetic images can be improved and optimised, in order to achieve an improved performance measure.
- In step S710, the End User identifies to the user interface 10 the target dataset that is to be used in step S21 (see FIG. 5). This is achieved by the End User entering the AI training job details into a user interface. The End User can provide details to instruct the overall AI system, such as scene details (e.g, plants, weeds, leaf objects), task details (e.g., detection, segmentation), and loop details (maximum number of loops to be performed, maximum time to be spent training the AI model, minimum accuracy that will be considered acceptable).
- In step S720, instructions are received by a script running on a serverless compute instance from the End User identifying the target dataset to be used in S21 (FIG. 5) and converts the End Users input into training job configuration and image dataset configuration.
- In step S721, the configuration for the image dataset is uploaded to an object-based storage provider and then further downloaded when the configuration is to be used in step S750.
- In step S722, the configured training job is uploaded to an object-based storage provider and is downloaded when the configured training job is to be used in step S730.
- In step S730, a cloud computing platform runs the image generation process, which generates the annotated data (S25, FIG. 5), and compiles the dataset (S26, FIG. 5) based on the configured image dataset.
- In step S740, the compiled dataset (S26, FIG. 3) is uploaded to an object-based storage provider. The dataset includes images, annotation metadata, and configuration information.
- In step S731, once the image generation process has compiled the requested dataset (S26, FIG. 5), a signal / request is uploaded to the object-based storage provider.
- In step S732, the upload of S731 to the object-based storage provider triggers a serverless compute instance. The script generates an API (application programming interface) request to start training (S30, FIG. 4) of the AI at step S750, using the compiled dataset generated in step S730.
- In step S750, the compiled dataset stored in S740 is downloaded from the object-based storage provider to the cloud computing platform along with the details of the training job generated at S722 to perform supervised training of the AI model (step S30 in FIG. 4) on the compiled dataset generated in step S730. The AI model is then validated using unseen validation data (step S40 in FIG. 4). The AI model then validates and identifies any underperforming areas (FIG. 6A). If underperforming areas are identified then the AI generates a new image dataset configuration.
- In step S751, the artifacts from the model loop are uploaded and stored to the cloud.
- In step S760, the new dataset configuration is uploaded to object-based storage provider, and can be downloaded when an appropriate request triggers a serverless compute instance.
- In step S761, when S750 has completed the training and evaluating, and has identified underperforming areas, it will upload a request to the object-based storage provider.
- In step S770, the upload of S761 to the object-based storage provider triggers a serverless compute instance. The serverless compute instance downloads the new dataset configuration which was stored on the object-based storage provider at step S760 and generates an API request, feeding the new dataset configuration in at step S730.
- The loop continues until a determination is made in step S750 that the AI model has successfully passed the threshold for each of the parameters of interest. When the performance of the AI model is therefore deemed acceptable (FIG. 6B), the method progresses to step S780.
- In step S780, the model is successfully validated and the model artifacts are updated before being uploaded to an object-based storage provider.
- In step S790, the information stored at step S780 by the object-based storage provider is downloaded and displayed to the End User.

The method steps of FIG. 7 may be distributed, and performed by different parties. A key is provided in FIG. 7, showing an example arrangement, with the shading of each step of this flowchart showing where that step may be performed:
- Steps S710 and S790 correspond to a "User Interface", which indicate display to the End User via a user interface.
- Steps S721, S722, S731, S740, S751, S760, S761, S780 correspond to "S3",which indicates the storage of information in the cloud - S3 is the AWS term for cloud storage - GCS would be the Google Cloud equivalent, while the Azure equivalent would be Blob Storage.
- Steps S720, S732 and S770 correspond to "Lambda", which indicates steps of the method that are performed by a serverless computer that can run code and converse / translate commands / inputs / outputs between the user interface between S3 and EC2 - Lambda is the AWS term for these small serverless compute instances - Google calls these Cloud Functions, while Azure calls them Azure Functions.
- Steps S730 and S750 correspond to a "EC2", which indicates a scalable compute instance running in the cloud - essentially virtual machines, like a laptop, but running in the cloud. EC2 is the AWS term; the Google Cloud term is Compute Engine, while Azure calls these Azure VMs.

FIG. 8 is a table showing how test results are improved as a dataset of synthetic images is revised. The table shows the number of loops that are performed, attributes of the dataset, test results which provide an identification (ID) value calculated by the validation unit 40 in step S40, compile results which provide a summary of the dataset compiled by the dataset compiler 26 in step S26, and feedback which provides a summary of the request. The table further shows bar charts which illustrate the feedback unit 60 in step S60.
- In a first loop, an initial dataset of 1,000 plants is generated. The performance measure shows an ID value of 52% for recognising images such that the leaf angle is less than 30 degrees to the stem (which is considered a weak performance measure), and an ID value of 68% for recognising images such that the leaf is twisted by more than 10% along its length (which is considered a weak performance measure, to a lesser extent). Feedback is provided from the AI training tool that the dataset should be revised by adding another 5% of images, for which the leaf angle is less than 30 degrees to the stem.
- In a second loop, the dataset is revised by including the additional images that have been generated. The performance measure shows an ID value of 63% for recognising images such that the leaf angle is less than 30 degrees to the stem (which is considered a weak performance measure), and an ID value of 68% for recognising images such that the leaf is twisted by more than 10% along its length (which is considered a weak performance measure, to a lesser extent). Feedback is provided from the AI training tool that the dataset should be revised by adding another 5% of images, for which the leaf angle is less than 30 degrees to the stem.
- In a third loop, the dataset is revised by including the additional images that have been generated. The performance measure shows an ID value of 81% for recognising images such that the leaf angle is less than 30 degrees to the stem (which is considered a weak performance measure), and an ID value of 68% for recognising images such that the leaf is twisted by more than 10% along its length (which is considered a weak performance measure). Feedback is provided from the AI training tool that the dataset should be revised by adding another 5% of images, for which the leaf angle is less than 30 degrees to the stem.
- In a fourth loop, the dataset is revised by including the additional images that have been generated. The performance measure shows an ID value of 96% for recognising images such that the leaf angle is less than 30 degrees to the stem (which is considered a strong performance measure), and an ID value of 68% for recognising images such that the leaf is twisted by more than 10% along its length (which is considered a weak performance measure). Feedback is provided from the AI training tool that a hold can be placed on any further generation of images for which the leaf angle is less than 30 degrees to the stem. Feedback is further provided from the AI training tool that the dataset should be revised by adding another 5% of images, for which the leaf is twisted by more than 10% per length.
- In a fifth loop, the dataset is revised by including the additional images that have been generated. The performance measure shows an ID value of 96% for recognising images such that the leaf angle is less than 30 degrees to the stem (which is considered a strong performance measure), and an ID value of 72% for recognising images such that the leaf is twisted by more than 20% along its length (which is considered a weak performance measure). Feedback is provided from the AI training tool that the dataset should be revised by adding another 5% of images, for which the leaf is twisted by more than 20% per length.
- In a sixth loop, the dataset is revised by including the additional images that have been generated. The performance measure shows an ID value of 96% for recognising images such that the leaf angle is less than 30 degrees to the stem (which is considered a strong performance measure), and an ID value of 89% for recognising images such that the leaf is twisted by more than 20% along its length (which is considered a weak performance measure). Feedback is provided from the AI training tool that the dataset should be revised by adding another 5% of images, for which the leaf is twisted by more than 20% per length.
- In a seventh loop, the dataset is revised by including the additional images that have been generated. The performance measure shows an ID value of 96% for recognising images such that the leaf angle is less than 30 degrees to the stem (which is considered a strong performance measure), and an ID value of 98% for recognising images such that the leaf is twisted by more than 20% along its length (which is considered a strong performance measure). Feedback is provided from the AI training tool that a hold can be placed on any further generation of images for which the leaf is twisted by more than 20% per length.
- After seven loops, it is found that the performance of two parameters has been maximised (i.e., leaf angle and leaf twist). For the revised dataset, the performance measures are above a threshold of 95%, and so the AI model is considered to have been successfully trained. The successful training of an AI model using a synthetic dataset gives confidence that the AI model will correctly perform recognition of parameters in images of a real-world environment.

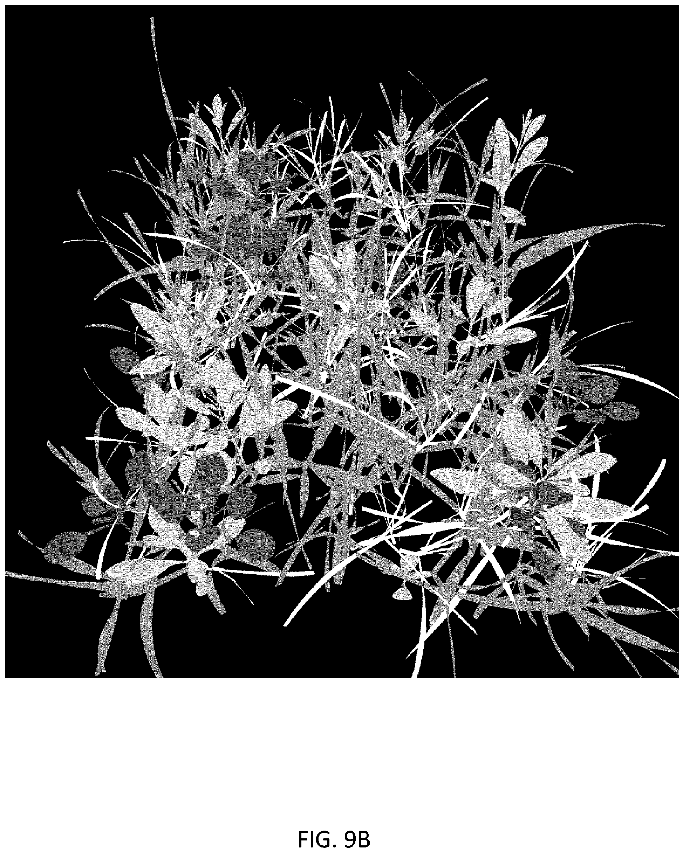

FIGs. 9A-9B illustrate annotation of a synthetic image of an agricultural environment. FIG. 9A shows a synthetic image that includes multiple species. FIG. 9B shows a 100%-pixel perfect annotation of each species with different shading used to distinguish these species. Such annotation data can also be presented in alternative formats for example a text file containing pixel coordinates in a specific image together with the object class associated with that pixel.

The method of training an AI model has been illustrated for performing object recognition in scene images of an agricultural environment. However, it will be appreciated that the disclosed methods are not restricted to agricultural environments and would cover any environment that is particularly complex. As a further illustrative example, an AI model may be trained to recognise leopard print, with a dataset restricted to examples of orange leopard print. However, if the AI software encounters an unseen example of green leopard print, then it may not recognise it as any form of leopard print. Thus, this would identify a demand at the training stage for datasets to be created for which leopard print is available in a variety of colours, starting with green in this example. Accordingly, the training data could be augmented to synthesise leopard print in a variety of colours, with training of the AI model being supplemented by training using the improved dataset.

The disclosed examples can be realised by a computer of a system or apparatus. These examples can be implemented by any device configured to execute instructions, or any dedicated hardware that is capable of carrying out all or a portion of the functionality. Disclosure is provided of hardware (e.g., a processor such as a central processing unit (CPU) or a microprocessor unit (MPU)) configured to read out and executes a program recorded on a memory device to perform the functions of the disclosed examples. For this purpose, the program is provided to the computer for example via a network or from a recording medium of various types serving as the memory device (e.g., a computer-readable medium such as a non-transitory computer-readable medium). The steps of the disclosed methods may be performed in any suitable order, or simultaneously where possible.

Although the disclosed subject matter has been described using specific terminology relating to apparatus features and/or method features, it is to be understood that the claimed subject matter is not necessarily limited to the examples disclosed. The scope of the following claims is to be accorded the broadest interpretation so as to encompass all such modifications and equivalent structures and functions. The advantages disclosed may relate to several of the examples that are disclosed.

## Claims

1. A method (S20) for generating a dataset, the method (S20) comprising:
defining (S21) a configuration of the dataset;
generating (S23) objects corresponding to the defined configuration;
generating (S24) a scene that includes the objects that have been generated;
compiling (S26) the dataset to include a number of images of the scene, together with annotation data associated with each image, wherein the annotation data identifies the objects that are depicted by that image;
validating (S40) an artificial intelligence model which has been trained (S30) using the dataset, to determine whether a performance measure of the artificial intelligence model satisfies a condition; and
formulating (S60) a request for the dataset to include further images, together with annotation data associated with each further image, if the performance measure does not satisfy the condition, wherein the further images are determined based on the performance measure.

2. The method for generating the dataset (S20) according to claim 1, further comprising:
defining (S21) a further configuration of the dataset based on the request for the dataset to include the further images together with annotation data associated with each further image;
generating (S23) further objects corresponding to the defined further configuration;
generating (S24) a further scene that includes the further objects that have been generated;
compiling (S26) the dataset to include a further number of images of the further scene, together with annotation data associated with each image, wherein the annotation data identifies the further objects that are depicted by that image;
validating (S40) an artificial intelligence model which has been further trained (S30) using the dataset, to determine whether the performance measure of the artificial intelligence model satisfies a condition; and
formulating (S60) a further request for the dataset to include even further images, together with annotation data associated with each even further image, if the performance measure does not satisfy the condition, wherein the even further images and annotation data are determined based on the performance measure.

3. The method (S20) for generating the dataset according to claim 1 or claim 2, wherein:
the dataset continues to be compiled until the performance measure satisfies the condition.

4. The method (S20) for generating the dataset according to any preceding claim, wherein:
validating (S40) the artificial intelligence model comprises determining, for a specific type of image, whether the performance measure does not satisfy the condition; and
formulating (S60) the request corresponds to identifying that the further images are to correspond to the specific type of image, if the performance measure determined for the specific type of image does not satisfy the condition.

5. The method (S20) for generating the dataset according to any preceding claim, wherein:
validating (S40) the artificial intelligence model comprises determining whether the performance measure exceeds a threshold value.

6. The method (S20) of generating the dataset according to any preceding claim, wherein:
validating (S40) the artificial intelligence model comprises using the artificial intelligence model to obtain interpreted data by interpreting a test image, and assessing whether the interpreted data matches annotation data which describes what is depicted by the test image.

7. The method (S20) for generating the dataset according to any preceding claim, further comprising:
retrieving (S22) resources that are to be used to generate the objects, the scene, or a starting dataset.

8. The method (S20) for generating the dataset according to any preceding claim, wherein:
each pixel of each image of the dataset is associated with annotation data which describes what object is depicted by that pixel.

9. The method (S20) for generating the dataset according to any preceding claim, wherein:
the scene corresponds to an agricultural environment.

10. A method (S100) for training an artificial intelligence model, the method (S100) comprising:
obtaining (S20) a dataset that has been generated by performing a method (S20) according to any preceding claim;
performing (S30) training of the artificial intelligence model using the dataset; and
outputting (S70) the trained artificial intelligence model if the performance measure satisfies the condition.

11. A program which, when executed by a computer, causes the computer to perform a method according to any preceding claim.

12. A computer-readable storage medium storing a program according to claim 11.

13. A system (100) for generating (S20) a dataset, the system (100) comprising:
a configuration unit (21) configured to define (S21) a configuration of the dataset;
a component generator (23) configured to generate (S23) objects corresponding to the defined configuration;
a scene generator (24) configured to generate (S24) a scene that includes the objects that have been generated;
a dataset compiler (26) configured to compile (S26) the dataset to include a number of images of the scene, together with annotation data associated with each image, wherein the annotation data identifies the objects that are depicted by that image;
a validation unit (40) configured to validate (S40) an artificial intelligence model which has been trained (S30) using the dataset, to determine whether a performance measure of the artificial intelligence model satisfies a condition; and
a feedback unit (60) configured to formulate (S60) a request for the dataset to include further images together with annotation data associated with each further image, if the performance measure does not satisfy the condition, wherein the further images are determined based on the performance measure.

14. The system (100) according to any one of claims 12 to 14, further comprising:
a human interface unit (10) configured to communicate between the system (100) and a user interface operated by a user.

15. A system (100) configured to train an artificial intelligence model, the system (100) comprising:
an obtaining unit (26) configured to obtain (S20) a dataset that has been generated by a method (S20) according to any one of claims 1 to 9;
a training unit (30) configured to perform training of the artificial intelligence model using the dataset; and
an output unit (50) configured to output the trained artificial intelligence model if the performance measure satisfies the condition.
